(19) Europäisches Patentamt
European Patent Office
Office européen des brevets

(11) **EP 4 621 942 A1**

(12) **EUROPEAN PATENT APPLICATION**
published in accordance with Art. 153(4) EPC

(43) Date of publication:
24.09.2025 Bulletin 2025/39

(21) Application number: 23891432.9

(22) Date of filing: 08.11.2023

(51) International Patent Classification (IPC):
$H01M\ 10/659^{(2014.01)}$ $\quad H01M\ 10/613^{(2014.01)}$
$H01M\ 10/625^{(2014.01)}$ $\quad H01M\ 10/653^{(2014.01)}$
$H01M\ 10/6556^{(2014.01)}$ $\quad H01M\ 10/6557^{(2014.01)}$

(52) Cooperative Patent Classification (CPC):
H01M 10/613; H01M 10/625; H01M 10/653;
H01M 10/6556; H01M 10/6557; H01M 10/659;
Y02E 60/10

(86) International application number:
PCT/JP2023/040144

(87) International publication number:
WO 2024/106280 (23.05.2024 Gazette 2024/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.11.2022 JP 2022182748

(71) Applicant: DENSO CORPORATION
Kariya-city, Aichi 448-8661 (JP)

(72) Inventors:
• YAMAGAMI Yuji
Kariya- city Aichi 4488661 (JP)
• UCHIYAMA Daiki
Kariya- city Aichi 4488661 (JP)
• YOSHIDA Shuhei
Kariya- city Aichi 4488661 (JP)
• NARAHARA, Yoko
Kariya-city, Aichi 4488661 (JP)

(74) Representative: TBK
Bavariaring 4-6
80336 München (DE)

(54) **BATTERY PACK**

(57) A battery pack to be installed in an electric mobile object includes a battery cell (30), and a cold storage member (40) configured to cool the battery cell. The cold storage member includes a supporter (41) that has a wall defining a space therein, a cold storage material (42) that is disposed in the space and supported by the supporter, and a beam (43) that bridges the wall. The supporter and the beam are made of a material that has a better thermal conductivity than the cold storage material.

**FIG. 4**

EP 4 621 942 A1

## Description

CROSS REFERENCE TO RELATED APPLICATIONS

The present application is based on and claims the benefit of priority from Japanese Patent Application No. 2022-182748 filed on November 15, 2022, the entire disclosure of the above application is incorporated herein by reference.

TECHNICAL FIELD

The disclosure in this specification relates to a battery pack installed in an electric mobile object.

BACKGROUND

Patent Document 1 discloses a battery pack installed in an electric mobile object. The disclosures of prior art literature are incorporated herein by reference to explain technical elements presented herein.

PRIOR ART LITERATURE

PATENT LITERATURE

Patent Document 1: JP 2020-170584 A

SUMMARY OF INVENTION

The battery pack disclosed in Patent Document 1 includes a battery cell and a cold storage material. The cold storage material is disposed in contact with the battery cell. The cold storage material is a latent heat storage material that absorbs heat from the battery cell by utilizing a phase change from solid to liquid. However, the cold storage material has a low thermal conductivity. Thus, simply bringing the cold storage material into contact with the battery cell is insufficient to transfer heat to the inside of the cold storage material. In the viewpoints described above, or in not-mentioned another viewpoint, the battery pack needs further improvements.

It is an objective of the present disclosure to provide a battery pack that has a higher heat dissipation performance.

A battery pack of the present disclosure is a battery pack to be installed in an electric mobile object. The battery pack includes a battery cell, and a cold storage member configured to cool the battery cell. The cold storage member includes a supporter, a cold storage material, and a beam. The supporter has a wall defining a space therein. The cold storage material is disposed in the space and supported by the supporter. The beam bridges the wall. The supporter and the beam are made of a material that has a greater thermal conductivity than the cold storage material.

According to the disclosed battery pack, the beam that bridges the wall of the supporter has superior thermal conductivity to the cold storage material. Thus, heat generated by the battery cell can be effectively dissipated from the supporter through the beam. As a result, the battery pack with high heat dissipation performance can be provided.

The disclosed aspects in this specification adopt different technical solutions from each other in order to achieve their respective objectives. Reference numerals in parentheses in the claims exemplify the correspondence with portions of embodiments described later, and are not intended to limit the technical scope. The objects, features, and advantageous effects disclosed in this description will become more apparent with reference to the following detailed description and accompanying drawings.

BRIEF DESCRIPTION OF THE DRAWINGS

FIG. 1 is a diagram showing a schematic configuration of an eVTOL.
FIG. 2 is a diagram showing a power profile.
FIG. 3 is a top view illustrating a schematic configuration of a battery pack according to a first embodiment.
FIG. 4 is a cross-sectional view taken along a line IV-IV in FIG. 3.
FIG. 5 is a cross-sectional view showing a supporter and beams.
FIG. 6 is a side view of the supporter and the beams.
FIG. 7 is a graph showing the effect of a latent heat storage material.
FIG. 8 is a diagram showing an effect of the beams.
FIG. 9 is a graph showing the phase state of a cold storage material.
FIG. 10 is a diagram showing a modified example.
FIG. 11 is a diagram showing a modified example.
FIG. 12 is a diagram showing the arrangement of battery cells and a cold storage member in a battery pack according to a second embodiment.
FIG. 13 is a perspective view of a cold storage member in a battery pack according to a third embodiment.
FIG. 14 is a cross-sectional view of a modified example.
FIG. 15 is a graph showing the relationship between the beam pitch and the phase change time in a battery pack according to a fourth embodiment.
FIG. 16 is a diagram of a modified example.
FIG. 17 is a cross-sectional view of a battery pack according to a fifth embodiment.
FIG. 18 is a top view illustrating a schematic configuration of the battery pack according to a sixth embodiment.
FIG. 19 is a cross-sectional view showing a cold storage member according to the sixth embodiment.
FIG. 20 is a partially enlarged view of the cold storage member in FIG. 19.

FIG. 21 is a cross-sectional perspective view of the cold storage member according to the sixth embodiment.

FIG. 22 is a diagram showing the cold storage member filled with a cold storage material.

FIG. 23 is a diagram of a modified example.

DETAILED DESCRIPTION OF THE PREFERRED EMBODIMENTS

The following sections describe multiple embodiments based on the accompanying drawings. In each embodiment, corresponding components may be denoted by the same reference numerals, and redundant descriptions may be omitted. When describing only a part of a structure in each embodiment, other parts of the structure may be applied from the previously described embodiments. Additionally, not only the explicitly stated combinations of structures in the description of each embodiment but also partial combinations of structures from multiple embodiments can be made, provided that there are no particular issues with such combinations.

(First Embodiment)

A battery pack of this embodiment is mounted on an electric mobile object. The electric mobile object can move by driving a rotating electric machine. Examples of the electric mobile object include a vehicle, a flying object, a ship, a construction machine, and an agricultural machine. The electric vehicle may be a battery electric vehicle (BEV), a hybrid electric vehicle (HEV), or a plug-in hybrid electric vehicle (PHEV). BEV is an abbreviation for Battery Electric Vehicle. HEV is an abbreviation for Hybrid Electric Vehicle. PHEV is an abbreviation for Plug-in Hybrid Electric Vehicle.

Examples of the electric flying object include an electronic vertical take-off and landing aircraft (eVTOL), an electronic short distance take-off and landing aircraft (eSTOL), and a drone. The eVTOL is an abbreviation of an electronic vertical take-off and landing aircraft. The eSTOL is an abbreviation of an electronic short distance take-off and landing aircraft. The following describes the battery pack installed in an eVTOL as an example.

<eVTOL>

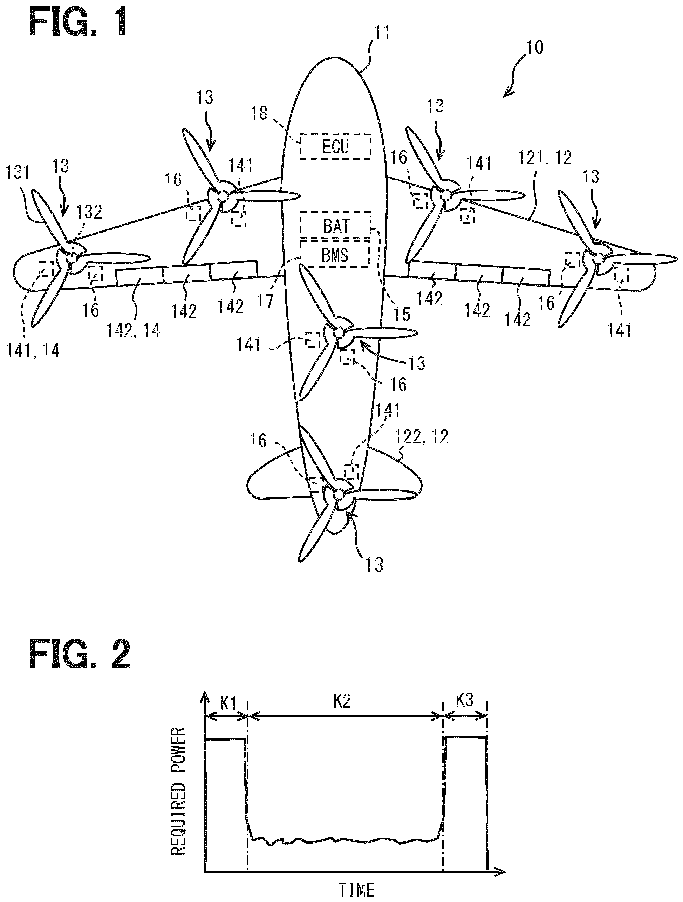

FIG. 1 shows a schematic configuration of the eVTOL. As an example, the eVTOL 10 of this embodiment includes an aircraft body 11, fixed wings 12, rotary wings 13, lift adjustment mechanisms 14, batteries 15, EPUs 16, BMSs 17, and an ECU 18.

The aircraft body 11 is the fuselage of the aircraft. The aircraft body 11 has a shape that extends in the front-rear direction. The aircraft body 11 defines a passenger compartment for passengers and/or a luggage compartment for carrying luggage.

The fixed wings 12 are wings of the aircraft and connected to the aircraft body 11. The fixed wings 12 provide the gliding lift. The gliding lift is the lift generated by the fixed wings 12. As an example, the fixed wings 12 include a main wing 121 and a tailplane 122. The main wing 121 extends left and right from near the center of the aircraft body 11 in the front-rear direction. The tailplane 122 extends left and right from the rear of the aircraft body 11. The shape of the fixed wings 12 is not particularly limited. For example, swept-back wings, delta wings, straight wings may be used.

The multiple rotary wings 13 are provided on the aircraft. At least one of the rotary wings 13 may be provided on the fixed wings 12. At least one of the rotary wings 13 may be provided on the aircraft body 11. The number of the rotary wings 13 included in the eVTOL 10 is not particularly limited. As an example, the multiple rotary wings 13 are provided on the aircraft body 11 and the main wing 121, respectively. The eVTOL 10 has six rotary wings 13.

The rotary wings 13 each may be referred to as a rotor, a propeller, or a fan. The rotary wings 13 each have blades 131 and a shaft 132. The blades 131 are attached to the shaft 132. The blades 131 are vanes that rotate together with the shaft 132. The multiple blades 131 extend radially about the axis of the shaft 132. The shaft 132 is a rotation axis of the rotary wing 13 and is rotated by a motor of the EPU 16.

The rotary wings 13 rotate to generate propulsive force. The propulsive force acts on the eVTOL 10 primarily as rotational lift during takeoff and landing of the eVTOL 10. The rotary wings 13 primarily provide rotational lift during takeoff and landing. The rotational lift is a lift force generated by the rotation of the rotary wings 13. During takeoff and landing, the rotary wings 13 may provide only rotational lift, or may provide both rotational lift and forward thrust. The rotary wings 13 provide rotational lift when the eVTOL 10 is hovering.

The propulsive force acts on the eVTOL 10 when the eVTOL 10 is cruising. The rotary wings 13 primarily provide thrust when the eVTOL is cruising. During cruise, the rotary wings 13 may provide thrust alone or may provide both lift and thrust.

The lift adjustment mechanisms 14 adjust the gliding lift of the fixed wings 12. The lift adjustment mechanisms 14 increase or decrease the gliding lift generated by the fixed wings 12. The lift adjustment mechanisms 14 adjust the gliding lift by, for example, adjusting at least one of the surface area, angle of attack (AOA), camber (i.e., curvature of airfoil), stall AOA, and wing velocity of the fixed wings 12. AOA is an abbreviation for Angle Of Attack. As an example, the lift adjustment mechanisms 14 include tilt mechanisms 141 and flaps 142.

The tilt mechanisms 141 are driven to adjust the tilt angle of the rotary wings 13. Each of the tilt mechanisms 141, together with a motor and an inverter that drive the tilt mechanism 141, constitute a tilt adjustment device. The tilt adjustment device including the tilt mechanism 141 may be provided each for the rotary wings 13. The tilt mechanisms 141 adjust the tilt angle of the rotary wings 13 by adjusting the relative inclination of the rotary wings 13 with respect to the aircraft.

During takeoff and landing, the tilt mechanisms 141 control the tilt angle so that the axis of each of the rotary wings 13 approaches a position parallel to the vertical direction. As a result, the propulsive force generated by the rotation of the rotary wings 13 acts on the eVTOL 10 primarily as rotational lift. Therefore, the eVTOL 10 is capable of short or vertical takeoff and landing.

During cruising, the tilt mechanisms 141 adjust the tilt angle so that the axis of each of the rotary wings 13 approaches a position parallel to the horizontal direction. As a result, the propulsive force generated by the rotation of the rotary wings 13 acts on the eVTOL 10 mainly as thrust. Thus, the eVTOL 10 can move forward using forward thrust generated by the rotation of the rotary wings 13 while obtaining gliding lift from the fixed wings 12. In addition, the gliding lift can be adjusted by changing the wing velocity with thrust.

Although an example in which the tilt mechanisms 141 are provided respectively for the rotary wings 13 has been shown, the present disclosure is not limited to this. For example, a common tilt mechanism may adjust the tilt angles of the multiple rotary wings 13 arranged side by side. The rotary wings 13 may be integrated with a part of a wing component, and the part of the wing component and the rotary wings 13 may be collectively displaced by a tilt mechanism.

The flaps 142 are movable wing pieces and provided on the fixed wing 12. Each of the flaps 142, together with a motor and an inverter that drive the flap 142, constitute a flap adjustment device. The flaps 142 are sometimes referred to as high-lift devices. As an example, the multiple flaps 142 are provided on the trailing edge of the main wing 121. Each of the multiple flaps 142 is provided with a motor and an inverter. The flaps 142 may be provided on the tailplane 122 in addition to the main wing 121. The flaps 142 may be provided on the leading edge of the fixed wings 12.

The flaps 142 adjusts the surface area and camber of the fixed wings 12. For example, the gliding lift acting on the main wing 121 increases by adjusting the flaps 142 provided on the main wing 121 to a lower position. Additionally, the gliding lift can be further increased by moving the flaps 142 in a direction extending beyond the main wing 121.

The lift adjustment mechanisms 14 are not limited to the tilt mechanisms 141 and the flaps 142 described above. The lift adjustment mechanisms 14 may include a tilt mechanism that adjusts the relative inclination of the fixed wings 12 with respect to the aircraft body 11. In this case, the angle of attack of the fixed wings 12 can be adjusted. The lift adjustment mechanisms 14 may include another rotary wing for thrust that is provided separately from the rotary wing 13. In this case, the wing velocity can be adjusted. Moreover, providing a rotary wing for thrust allows the rotary wing 13 to be used exclusively for lift (i.e., rotational lift).

The lift adjustment mechanism 14 may include a variable wing. The variable wing can adjust lift by changing the surface area, camber, and angle of incidence of the fixed wings 12. The lift control mechanism 14 may include a high-lift device other than the flaps 142, such as slats. The slats are provided on the leading edge of the main wing 121. By moving the slats forward relative to the main wing 121, a gap is defined between the slats and the main wing 121, thereby delaying separation. Thus, lift can be increased up to a higher angle of attack without stalling. That is, the stall AOA can be delayed.

The batteries (BAT) 15 are rechargeable secondary batteries capable of storing direct current power. The batteries 15 supply power to the EPUs 16, the ECU 18, the tilt adjustment devices, and the flap adjustment devices. The batteries 15 also supply power to auxiliary equipment (not shown), such as an air conditioner. As an example, the eVTOL 10 of this embodiment includes multiple batteries 15. The multiple batteries 15 may be connected to each other in series and/or parallel, or may be arranged independently without being connected to each other. The batteries 15 may be provided respectively for the EPUs 16 or may be provided redundantly for the EPUs 16.

Each of the EPUs 16 includes a motor and an inverter, and rotationally drives the rotary wing 13 which applies propulsive force to the eVTOL 10. The EPU is an abbreviation of an electric propulsion unit. As an example, the number of the EPUs 16 is the same as the number of the rotary wings 13. In other words, the eVTOL 10 has six EPUs 16. The EPUs 16 and the rotary wings 13 are connected in a one-to-one relationship. Alternatively, two or more rotary wings 13 may be connected to a single EPU 16 via a gear box.

The BMSs 17 monitor the state of the batteries 15. The BMS is an abbreviation of a battery management system. For example, a single BMS 17 is provided for a single battery 15. The BMSs 17 may predict or detect an abnormality of the batteries 15 by monitoring the state of each of the batteries 15.

The ECU 18 controls the flight of the eVTOL 10. ECU is an abbreviation of Electronic Control Unit. The ECU 18 performs control to fly the eVTOL 10 in a flight state according to operation by a pilot as an operator, remote operation by an operator, or control by a control system. The ECU 18 executes flight control based on the detection results of the BMS 17 and various sensors. The ECU 18 controls devices such as the motors of the EPUs 16, the motors of the tilt adjustment devices, and the motors of the flap adjustment devices. The ECU 18 may control the auxiliary machinery.

<Power Profile>

FIG. 2 shows a power profile from take-off to landing of the eVTOL 10. It should be noted that the power profile of electric flying vehicles other than eVTOL is similar to that of eVTOL. A period K1 is referred to as a take-off period, a take-off time, a departure period, a departure time, or the like. A period K2 is referred to as a cruising period, a cruising time, or the like. A period K3 is referred to as a landing period, a landing time, an arrival period, an arrival time, or the like. For illustrative purposes, the required power (i.e., output) during the periods K1 and K2 in FIG. 2 is substantially constant.

The eVTOL 10 moves up from a take-off point to a cruising start point during the period K1. The eVTOL 10 cruises at a predetermined altitude during the period K2. The eVTOL 10 moves down from an end point of the period K2 to a landing point during the period P3. The movement of the eVTOL 10 mainly includes a horizontal direction component during the period P2 and mainly includes a vertical direction component during the periods K1 and K3. High output is required continuously for a predetermined time to drive the rotary wings 13 of the eVTOL 10 during the periods K1 and K3 during which the eVTOL 10 moves in the vertical direction.

This high output places a large load on the batteries 15 and EPUs 16, which are driving devices for the rotary wings 13. For example, the batteries 15 generate heat and their temperature rises temporarily.

<Battery Pack>

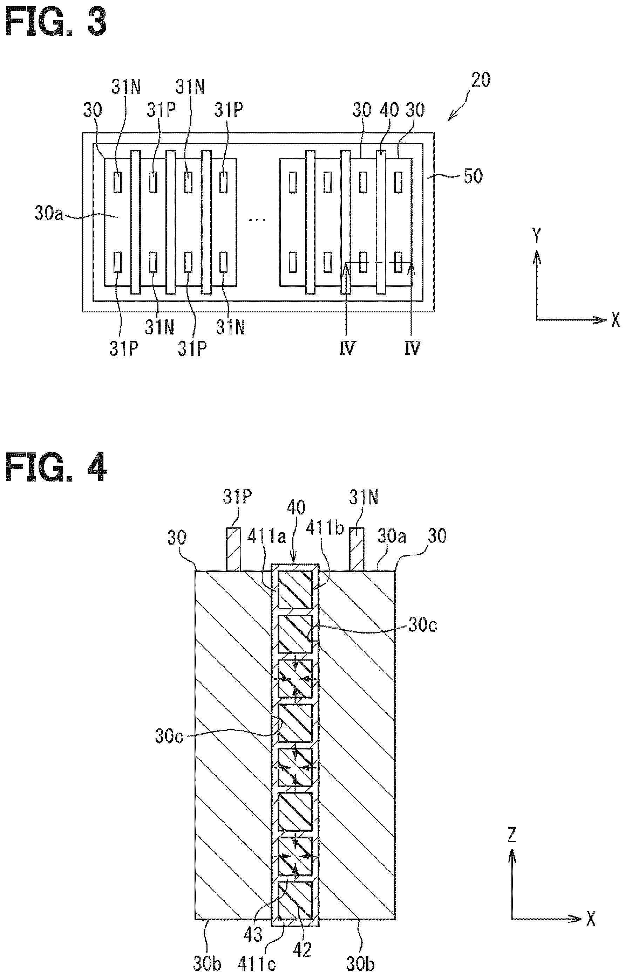

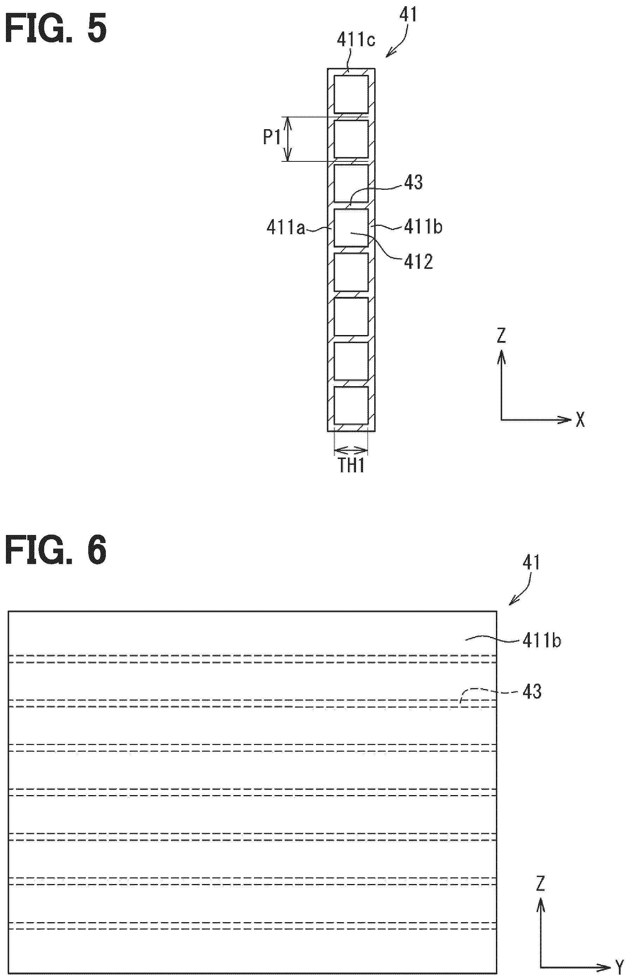

FIG. 3 shows the schematic configuration of a battery pack. In FIG. 3, a part of the housing is omitted in order to show battery cells housed in the housing. In FIG. 3, illustration of some of the battery cells 30 are omitted. FIG. 4 shows the arrangement of the battery cells and a cold storage member. FIG. 4 is a cross-sectional view taken along a line IV-IV of FIG. 3. FIG. 4 illustrates a simplified configuration of the battery cells. FIG. 5 shows the structure of the cold storage member of FIG. 4 without a cold storage material. That is, the structure based on a supporter and beams is shown. FIG. 6 is a side view showing the structure of the supporter and the beams.

In the following, the height direction, the longitudinal direction, and the width direction of each battery cell are indicated as the Z direction, the Y direction, and the X direction, respectively. The X direction, the Y direction, and the Z direction are orthogonal to each other.

As shown in FIGS. 3 and 4, the battery pack 20 includes multiple battery cells 30, cold storage members 40, and a housing 50. The battery pack 20 also includes bus bars, connectors, and fixing members (not shown).

Each battery cell 30 is a secondary battery that generates an electromotive voltage by a chemical reaction. The battery cell 30 may be a lithium-ion secondary battery, a nickel-hydrogen secondary battery, or an organic radical battery. The battery cell 30 may be a secondary battery in which the electrolyte is liquid, or a so-called all-solid-state battery in which the electrolyte is solid.

The battery cells 30 have a common structure. The number and arrangement of the battery cells 30 are not particularly limited. The multiple battery cells 30 may be connected in series, or may be connected in parallel and in series. As an example, the battery cells 30 in this embodiment are connected in series. The multiple battery cells 30 are arranged side by side in the X direction. The multiple battery cells 30 are stacked in the X direction with the cold storage members 40 interposed therebetween. The battery pack 20 may include multiple stacks of the battery cells 30. An electrically connected structure of the multiple battery cells 30 is sometimes called a battery module. The multiple battery cells 30 included in a single battery pack 20, that is, a battery module, corresponds to one of the batteries 15 described above.

Each battery cell 30 includes a power generating element and a battery case that accommodates the power generating element. The battery case is an outer casing for the battery cell 30. The battery case may be formed of metal. The shape of the battery cell 30, i.e., the battery case, is not particularly limited. The battery case may have a cylindrical shape, or a rectangular shape. As an example, the battery cell 30 of this embodiment has a rectangular shape, specifically, a thin and flat shape in the X direction.

The battery cell 30 has a top surface 30a, a bottom surface 30b, and four side surfaces 30c. The bottom surface 30b is opposite to the top surface 30a in the Z direction. The side surfaces 30c connect between the top surface 30a and the bottom surface 30b. Two of the side surfaces 30c are opposite to each other in the X direction. The other two of the side surfaces 30c are opposite to each other in the Y direction.

The multiple battery cells 30 are arranged side by side in the X direction. Each battery cell 30 has electrode terminals 31P, 31N protruding from the top surface 30a. The electrode terminal 31P is electrically connected to the positive electrode of the battery cell 30. The electrode terminal 31P may be referred to as a positive electrode terminal or a P terminal. The electrode terminal 31N is electrically connected to the negative electrode of the battery cell 30. The N-terminal may be referred to as a negative electrode terminal or a N terminal. The electrode terminals may be referred to as current collecting tabs.

The multiple battery cells 30 are arranged such that the electrode terminals 31P and the electrode terminals 31N are positioned alternately in the X direction. Moreover, the battery cells 30 are arranged such that the positions of the top surfaces 30a in the Z-direction are substantially equal to each other. The relative positions of the multiple battery cells 30 are fixed by fixing members (not shown). The fixing member may be a case or a restraining member such as a band.

In the above-described arrangement, the electrode terminals 31P, 31N of adjacent battery cells 30 are electrically connected by a bus bar (not shown). In other words, the multiple battery cells 30 are connected in series by the bus bars.

Each cold storage member 40 includes a supporter 41, a cold storage material 42, and beams 43. When the thickness of the cold storage member 40 is relatively thin compared to the battery cell 30, the cold storage member 40 may be referred to as a cold storage sheet.

The supporter 41 supports the cold storage material 42. The supporter 41 has a wall 411 and a space 412 defined by the wall 411 therein. The supporter 41 holds the cold storage material 42 in its storage space. The supporter 41 is formed of a material having superior thermal conductivity to the cold storage material 42. The supporter 41 may be formed of a metal, a ceramic, or a resin containing fillers.

As an example, the supporter 41 in this embodiment is formed of a metal, specifically, an aluminum-based material. The supporter 41 has a thin box shape that is thin in the X direction. The supporter 41 includes facing walls 411a and 411b and side walls 411c. The facing walls 411a and 411b face each other in the X direction. The side walls 411c connect between the ends of the facing walls 411a and 411b and closes the space 412.

The cold storage material 42 exhibits a cold storage effect. The cold storage material 42 cools the battery cell 30 by absorbing heat generated by the battery cell 30. The cold storage material 42 may be a latent heat storage material for cooling. Instead of the latent heat storage material, water or cooling water to which LLC has been added may be used as the cold storage material 42. LLC is an abbreviation for long life coolant. The cold storage material is sometimes called a heat storage material.

As an example, the cold storage material 42 in this embodiment is a latent heat storage material for cooling. The latent heat storage material is sometimes called PCM. PCM is an abbreviation for Phase Change Material. The phase of the latent heat storage material changes between solid and liquid. The latent heat storage material uses the latent heat of a substance. The latent heat storage material maintains the temperature of the battery cell 30 at a predetermined temperature or within a predetermined temperature range. The latent heat storage material may be anhydrous carbon compound, specifically a paraffin compound. Alternatively, the latent heat storage material may be hydrates. Hydrates may be hydrates of sodium acetate, sodium sulfate, sodium nitrate.

As an example, the cold storage material 42 in this embodiment is an anhydrous carbon compound, specifically a paraffin-based cold storage material. The phase transition temperature of the cold storage material 42 between the solid phase and the liquid phase is set within the range of 30 °C to 60 °C. The cold storage material 42 (e.g., the paraffin-based cold storage material) has a higher density in the solid phase than in the liquid phase. Thus, when the cold storage material 42 changes from the solid phase to the liquid phase, the volume expands by about 10%. Therefore, the filling rate of the cold storage material 42 in the solid phase for the space 412 is adjusted such that the filling rate in the liquid phase is equal to or less than 100%, and close to 100%.

The beams 43 bridge the walls 411 of the supporter 41. The beams 43 are in contact with the cold storage material 42. The beams 43 may be referred to as bridging members. The beams 43, like the supporter 41, are formed of a material having superior thermal conductivity to the cold storage material 42. The beams 43 may be formed of a metal, a ceramic, or a resin containing fillers. The beams 43 may be made of material same as that of the supporter 41, or may be made of material different from that of the supporter 41. The beams 43 may be seamlessly connected to and integrally formed with the supporter 41, or may be connected to the supporter 41 by bonding. The beams 43 may bridge different parts of the walls 411.

As an example, the beams 43 of the present embodiment bridge the two facing walls 411a, 411b as shown in FIGS. 4 and 5. As shown in FIG. 6, the multiple beams 43 extending in the Y direction are provided integrally with the supporter 41. Each of the beams 43 has at least a part in contact with the cold storage material 42. The beams 43 are provided at a predetermined pitch P1 in the Z direction. The beams 43 divide the space 412, that is, the cold storage material 42 disposed in the space 412, into multiple sections. The beams 43 may be referred to as separators, or separation walls. The beams 43 are continuously connected to the supporter 41. The beams 43 and the supporter 41 are integrally formed with each other by extrusion tubing using an aluminum-based material. Extrusion tubing is sometimes referred to as extrusion pipe processing.

As shown in FIG. 3, the cold storage members 40 having the above-described structure are arranged alternately with the battery cells 30 in the X direction, which is the stacking direction. As shown in FIG. 4, the facing wall 411a of the supporter 41 is in direct contact with one side surface 30c of the battery cell 30. The facing wall 411b of the supporter 41 is in direct contact with one side surface 30c of another battery cell 30. The cold storage member 40 is interposed between and held by the battery cells 30 in the X direction. The facing walls 411a and 411b may be in indirect contact with the battery cells 30. For example, the facing walls 411a and 411b may be in indirect contact with the battery cells 30 through a thermal conductive member (not shown) such as a TIM. The TIM is an abbreviation for Thermal Interface Material. The cold storage member 40 may be adhesively fixed to the battery cells 30.

FIG. 3 shows an example in which the battery cells 30 located at both ends in the stacking direction is in contact with the cold storage member 40 only on one side surface, specifically only on the inner side surface in the stacking direction. Instead of this, the cold storage members 40 may be disposed on the outer side surfaces of the battery cells 30 located at both ends in the stacking direction. In this case, only one of the facing walls 411a and 411b of the cold storage members 40 located at both ends in the stacking direction is in contact with the side surfaces 30c of the battery cells 30.

The housing 50 houses the battery cells 30. The housing 50 may be formed of a metal such as aluminum, or a resin material. The cold storage member 40 may be housed in the housing 50, or at least a portion of the cold storage member 40 may be disposed outside the housing 50. As an example, the housing 50 of the present embodiment is formed (e.g., die-cast formed) using an aluminum-based material. The housing 50 accommodates the battery cells 30 and the cold storage members 40. The heat generated by the battery cells 30 is dissipated through the cold storage members 40 to, for example, the bottom wall of the housing 50. The bottom wall is a wall of the housing 50 facing the bottom surfaces 30b of the battery cells 30.

<Summary of First Embodiment>

According to the present embodiment, the battery pack 20 includes the cold storage members 40. Each cold storage member 40 includes the supporter 41 having the wall 411 that defines the space 412 therein, the cold storage material 42 that is disposed in the space 412 and supported by the supporter 41, and the beams 43 that bridge the wall 411. The supporter 41 and the beams 43 are formed of a material having superior thermal conductivity to the cold storage material 42. The cold storage material 42 is in contact not only with the supporter 41 but also with the beams 43. The heat of the battery cells 30 is transferred to the cold storage material 42 not only through the supporter 41 but also through the beams 43.

Thus, the cold storage material 42 can efficiently absorb heat even with the low thermal conductivity. Therefore, the heat generated by the battery cells 30 can be dissipated effectively. As a result, it is possible to provide a battery pack 20 with high heat dissipation performance compared to a configuration without the beams 43.

The cold storage member is lighter in weight than a circulation type cooler that performs cooling by circulating a refrigerant. This enables weight reduction while maintaining cooling performance, particularly for electric flying vehicles such as the eVTOL 10. This makes it possible to increase the driving range.

In this embodiment, as an example, the beams 43 bridge the facing walls 411a and 411b of the supporter 41. At least one of the facing walls 411a, 411b is in direct or indirect contact with the battery cell. In FIG. 4, the heat transfer is indicated by arrows. As shown in FIG. 4, heat is not only transferred from the facing walls 411a and 411b to the cold storage material 42, but also transferred from the facing walls 411a and 411b to the cold storage material 42 through the beams 43. When the battery cell is in contact with one of the facing walls 411a and 411b of the cold storage material 42, the heat of the battery cell is transferred from the one of the facing walls 411a to the other through the beams 43. Since heat is transferred to the entire area of the cold storage material 42, the heat dissipation performance can be further improved.

In this embodiment, the beams 43 are pillars extending in one direction (i.e., the Y direction). The beams 43 having such a structure can be integrally formed with the supporter 41. The cold storage member 40 can be made lighter while ensuring the cooling performance. The cold storage member 40 has the multiple beams 43. The multiple beams 43 divide the space 412 into multiple sections. The multiple beams 43 divide the cold storage material 42 into multiple sections. Thus, heat is more easily transferred to the entire area of the cold storage material 42.

In the present embodiment, at least a portion of the cold storage member 40 is interposed between and held by adjacent battery cells 30. The cold storage member 40 is interposed between and held by the battery cells 30 from both sides in the X direction, which is the stacking direction. In this configuration, heat from the battery cells 30 is transferred to the cold storage members 40 from the side surfaces 30c. This side cooling structure increases the contact area and reduces the thermal resistance from the battery cell 30 to the cold storage material 42, thereby further improving the heat dissipation performance. Furthermore, the beams 43 can suppress expansion of the battery cells 30 during charging, which helps reduce the occurrence of non-uniform electrochemical reactions. Additionally, since the beams 43 maintain the shape of the cold storage member 40, the fixed structure of the battery cells 30 provided by the fixing members can be maintained.

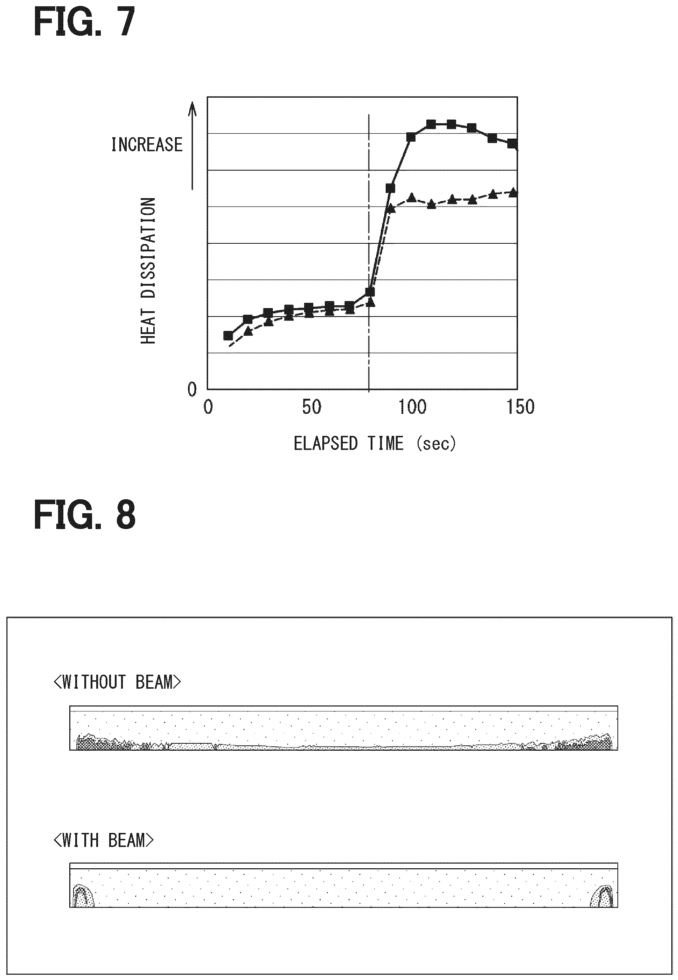

FIG. 7 shows the results of a simulation showing the relationship between the presence or absence of the beams 43 and the amount of heat dissipated from the battery cells 30. In this simulation, the battery cells 30 and the cold storage member 40 were arranged as shown in FIG. 4. The cold storage material 42 is a paraffin-based latent heat storage material having a melting point at a predetermined temperature between 40 °C and 45 °C, a thermal conductivity of 0.1 W to 1 W/(m·K), and a latent heat of a predetermined value between 100 and 200 KJ/L. The supporter 41 and the beams 43 were made of aluminum having a thickness of 0.2 mm, and the pitch of the beams 43 was 2 mm. In FIG. 7, the solid line indicates the results of a configuration having the beams 43, and the dashed line indicates the results of a configuration without the beams 43. The dot-dash line in FIG. 7 indicates a timing at which the cold storage material 42 starts to melt. FIG. 8 shows the phase state of the cold storage material 42 after 180 seconds in the above simulation. In FIG. 8, the solid phase is indicated by dense dot hatching, and the liquid phase is indicated by sparse dot hatching.

As shown in FIG. 7, the amount of heat dissipation increases after the start of melting due to the effect of latent heat. Moreover, it is clear that providing the beams 43 can increase the amount of heat dissipated from the battery cells 30, that is, the amount of heat transferred to the cold storage member 40. It is clear from FIG. 8 that providing the beams 43 reduces the residual solid phase of the cold storage material 42 during the transition to the liquid phase. In other words, it is clear that heat is transferred to almost the entire area of the cold storage material 42 by providing the beams 43.

The cold storage material 42 may be a refrigerant such as water as described above. In this embodiment, the cold storage material 42 is a latent heat storage material. Latent heat storage material has a high specific heat capacity. Thus, the amount of the cold storage material 42 required to cool the batteries 15 can be reduced while ensuring the heat capacity (i.e., thermal mass). For example, it is possible to further increase the cruising range of the eVTOL 10.

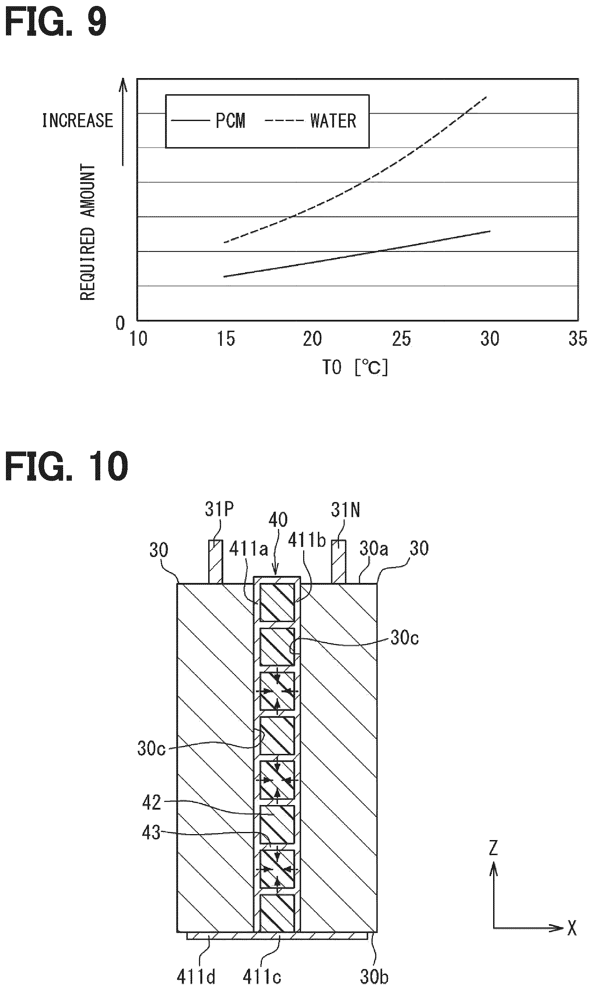

FIG. 9 shows a simulation result. The horizontal axis indicates the temperature T0 °C before discharge, and the vertical axis indicates the required amount m. The required amount m is zero (0) at the bottom end and increases upward. This simulation compares water with a latent heat storage material. The specific heat capacity Cpcm of the latent heat storage material was set to 2 kJ/(kg·K), and the latent heat L of the latent heat storage material was set to a predetermined value between 100 and 200 kJ/L. The heat capacity Ccell of the battery cell 30 is set to about 200 J/K, the heat generation amount Q is set to 12 kJ, and the upper limit temperature Tmax is set to 55K. In FIG. 9, the solid line indicates the result for the latent heat storage material (i.e., PCM), and the dashed line indicates the result for water.

The average specific heat capacity Cave can be calculated using Equation 1. The required amount m can be calculated using Equation 2. Here, $\Delta T$ is the difference between the upper limit temperature Tmax and the temperature T0.

$$(\text{Equation 1}) \quad Cave = (Cpcm \cdot \Delta T + L)/\Delta T$$

$$(\text{Equation 2}) \quad (Ccell + m \cdot Cave) \cdot \Delta T = Q$$

As shown in FIG. 9, it is clear that by using the latent heat storage material, the required amount of the cold storage material 42 can be reduced while ensuring the necessary cooling performance.

In this embodiment, the phase transition temperature between the solid phase and the liquid phase in the latent heat storage material falls between 30 °C and 60 °C. This allows the temperature of the battery cells 30 to be maintained at a temperature lower than the upper limit temperature of the battery cells 30 assumed in the eVTOL 10.

As an example, the latent heat storage material of this embodiment is an anhydrous carbon compound, specifically, a paraffin compound. Paraffin-based latent heat storage material exhibits minimal supercooling. Moreover, paraffin-based latent storage material does not corrode aluminum. Thus, it is suitable for combination use with the supporter 41 and beams 43 made of an aluminum-based material.

The cold storage material 42 is supported by the supporter 41. The cold storage material 42 is injected into the space 412 of the supporter 41 and held by the supporter 41. Thus, the cold storage member 40 including the cold storage material 42 can be easily separated from the battery cell 30. The cold storage member 40 can be provided detachably to the battery cell 30. This configuration allows the cold storage members 40 to be removed after the flight of the eVTOL 10, and cooled back to the solid phase. For example, after the flight, the cold storage member 40 can be removed and replaced with another cold storage member 40 that has already phase transitioned to the solid phase. Replacement can reduce preparation time until the next flight.

<Modifications>

The beams 43 bridge the wall (i.e., the facing walls 411a, 411b) that are in contact with the battery cells 30, but the present disclosure is not limited to this. For example, the beams 43 may bridge between the side walls 411c. Even in this configuration, heat is transferred from the supporter 41 to the cold storage material 42 through the beams 43. Therefore, the heat dissipation performance can be improved compared to a configuration without the beams 43.

The cold storage material is a paraffin-based latent heat storage material as an example, but the cold storage material is not limited to this. The cold storage material may be a latent heat storage material that is water-soluble and has a pH adjusted to a value between 6 and 8. The above-mentioned hydrous corresponds to such latent heat storage material. By adjusting the pH to a neutral range, corrosion of aluminum can be suppressed. In addition, hydrous latent heat storage materials also exhibit minimal supercooling. In addition, the phase transition temperature is relatively easy to adjust.

The cold storage member 40 may have a protrusion, together with the beams 43, that protrudes from the wall 411 but does not bridge the wall 411. The protrusion is formed of the same material as the beams 43. Thus, heat dissipation performance can be enhanced.

As shown in FIG. 10, the supporter 41 may include an extension 411d. The extension 411d extends from the side wall 411c along the bottom surface 30b. The extension 411d extends in a direction perpendicular to the Y direction. The extension 411d may be in direct or indirect contact with the bottom surface 30b of the battery cell 30. Heat is transferred to the extension 411d through at least one of the battery cells 30, other portions of the supporter 41, and the cold storage material 42. Providing the extension 411d allows the heat absorbed by the cold storage material 42 to be easily released toward the bottom surface 30b. Thus, heat dissipation performance can be improved in a configuration in which a heat exchange element such as a heat dissipation fin is disposed on the bottom surface 30b of the battery cells 30.

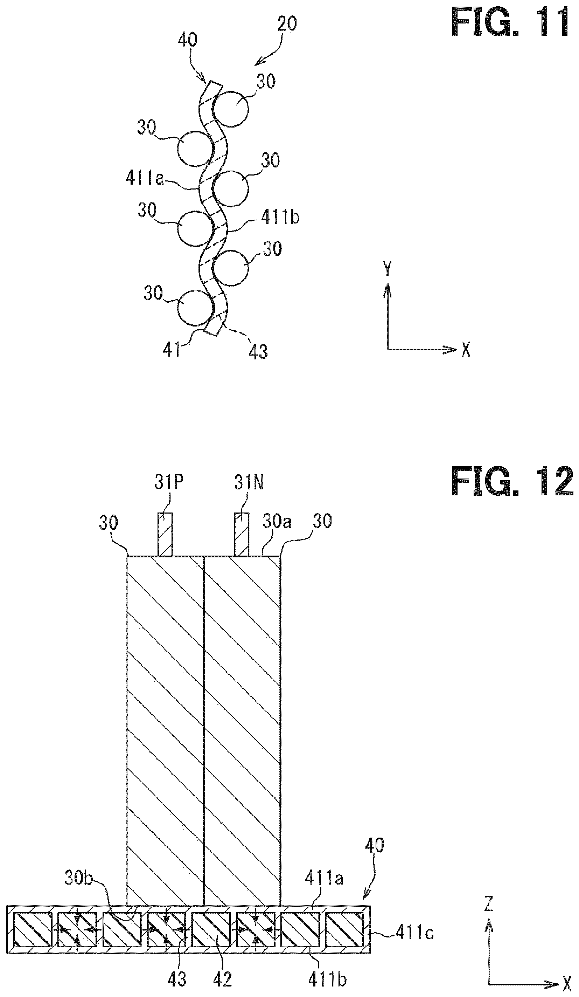

As shown in FIG. 11, the cold storage member 40 may be arranged in a meandering manner. In FIG. 11, each battery cell 30 has a cylindrical shape. The battery cells 30 are arranged in a staggered pattern in a top view in the Z direction. The cold storage member 40 is sandwiched between adjacent battery cells 30 to have a meandering shape. The beams bridge the facing walls 411a and 411b of the supporter 41. The facing wall 411a is in contact with the battery cells 30 in the first row in the X direction, and the facing wall 411b is in contact with the battery cells 30 in the second row.

(Second Embodiment)

This embodiment is a modification based on the preceding embodiment, and the description of the preceding embodiment are incorporated. In the previous embodiment, the cold storage members are in contact with the side surfaces of the battery cells. Alternatively, the cold storage member may be in contact with the bottom surface of the battery cells.

FIG. 12 shows the arrangement of the battery cells 30 and the cold storage member 40 in the battery pack 20 according to this embodiment. FIG. 12 corresponds to FIG. 4. The cold storage member 40 is disposed on the bottom surface 30b of the battery cells 30. Similar to the preceding embodiment, the cold storage member 40 includes the supporter 41 having the facing walls 411a and 411b, and the beams 43 bridging the facing walls 411a and 411b. The facing walls 411a of the supporter 41 is in direct or indirect contact with the bottom surfaces 30b. The cold storage member 40 is disposed to enclose all of the battery cells 30 when viewed in a plan view in the Z direction. The cold storage member 40 is in contact with the bottom surface 30b of each of the battery cells 30. Other configurations are similar to those described in the preceding embodiment.

<Summary of Second Embodiment>

In this embodiment, at least a portion of the cold storage member 40 is in contact with the bottom surfaces 30b of the battery cells 30. The heat of the battery cells 30 is transferred to the cold storage material 42 not only through the supporter 41 but also through the beams 43. Thus, the cold storage material 42 can efficiently absorb heat even with the low thermal conductivity. Therefore, the heat generated by the battery cells 30 can be dissipated effectively. Since the weight of the battery cells 30 acts on the cold storage member 40, thermal contact is easily achieved.

Furthermore, since the cold storage member 40 is disposed on the bottom surfaces 30b of the battery cells 30, the cold storage member 40 including the cold storage material 42 can be more easily separated from the battery cells 30 compared to a configuration in which it contacts the side surfaces 30c of the battery cells 30. In other words, the cold storage member 40 can be easily detachable from the battery cells 30.

Furthermore, providing the beams 43 can suppress deformation of the cold storage member 40 when the weight of the battery cells 30 acts on the cold storage member 40. Since the beams 43 maintain the shape of the cold storage member 40, the fixed structure of the battery cells 30 provided by the fixing members can be maintained.

<Modifications>

The common cold storage member 40 (i.e., the single cold storage member 40) is disposed for the multiple battery cells 30 as an example in this embodiment, but the present disclosure is not limited to this. The battery pack 20 may include multiple cold storage members 40. For example, in a configuration including multiple battery stacks each formed by stacking the multiple battery cells 30, the cold storage member 40 may be provided for each battery stack.

The configuration of the present embodiment can be combined with the preceding embodiments except for the configuration in which the cold storage members 40 are in contact with the side surfaces 30c. For example, the cold storage material 42 may be a latent heat cold storage material in a configuration in which the cold storage member 40 is in contact with the bottom surface 30b. The cold storage member 40 may include the beams 43 bridging the side walls 411c. The supporter 41 may include an extension 411d extending in a direction perpendicular to the Z direction.

(Third Embodiment)

This embodiment is a modification based on the preceding embodiments, and the description of the preceding embodiments are incorporated. In the previous embodiments, the beams 43 are integrally formed with the supporter 41 by extrusion tubing. However, the structure of the supporter 41 and the beams 43 is not limited to this example. In this embodiment, a structure that allows further weight reduction is shown.

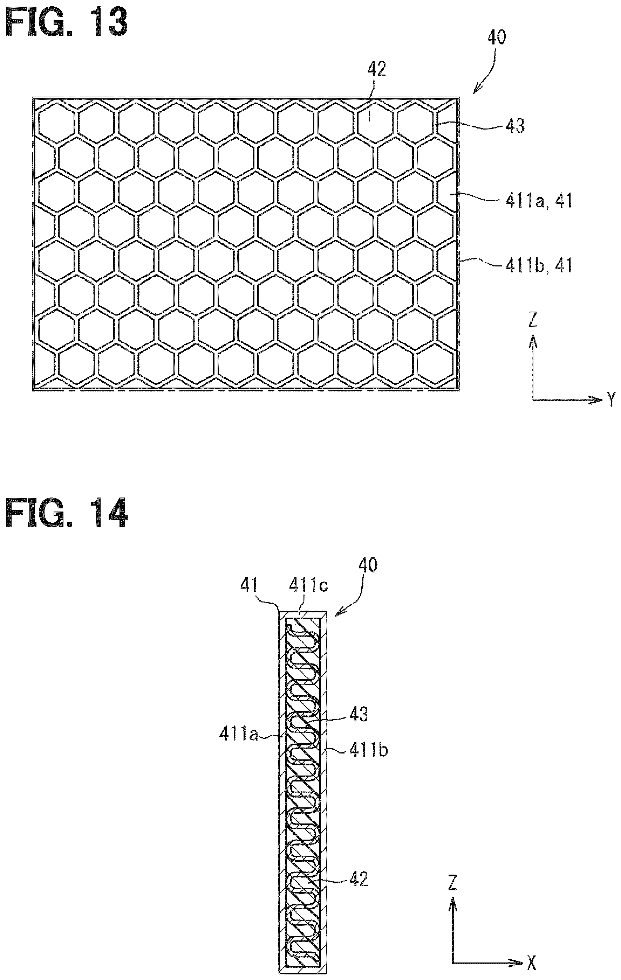

FIG. 13 is a top view of the cold storage member 40 in the battery pack 20 according to this embodiment. FIG. 13 corresponds to FIG. 6. In FIG. 13, the facing wall 411b on the near side is indicated by a dashed line. That is, in order to show the beam structure, the facing wall 411b is illustrated in a see-through manner.

The cold storage member 40 shown in FIG. 13 also includes the supporter 41, the cold storage material 42, and a beam 43. The supporter 41 has the facing walls 411a and 411b as the wall 411. The supporter 41 does not have side walls 411c. The beam 43 has a honeycomb structure. The beam 43 bridges the facing walls 411a, 411b in the X direction. The beam 43 is fixed to the flat facing walls 411a, 411b by, for example, joining or bonding. The space 412 of the supporter 41 is partitioned by the facing walls 411a, 411b and the beam 43 into multiple sections each having a substantially regular hexagonal prism shape. Each section is filled with the cold storage material 42. Other configurations are similar to those described in the preceding embodiment.

<Summary of Third Embodiment>

In this embodiment, the beam 43 has a honeycomb structure. The honeycomb structure can reduce the weight of the beam 43 while ensuring the strength required to withstand the expansion of the battery cells 30, the weight of the battery cells 30, and pressure from the fixing members. Thus, the heat dissipation performance can be improved while the cold storage member 40, and thus the battery pack 20 can be made lighter.

<Modifications>

As shown in FIG. 14, the cold storage member 40 may have a fin-shaped beam 43. The fin shape is sometimes referred to as a corrugated plate shape. The cold storage member 40 has an inner fin structure in which the fin-shaped beam 43 is disposed inside the supporter 41. This inner fin structure can reduce the weight of the beam 43 while ensuring the strength to withstand the expansion of the battery cells 30, the weight of the battery cells 30, and pressure from the fixing members. Thus, the heat dissipation performance can be improved while the cold storage member 40, and thus the battery pack 20 can be made lighter.

The configuration described in this embodiment can be combined with any of the preceding configurations. For example, in the configuration in which the cold storage member 40 is in contact with the side surface 30c of the battery cell 30, the cold storage member 40 may have the above-mentioned honeycomb structure or inner fin structure. In the configuration in which the cold storage member 40 is in contact with the bottom surface 30b of the battery cell 30, the cold storage member 40 may have a honeycomb structure or an inner fin structure. In the cold storage member 40 having a honeycomb structure or an inner fin structure, the cold storage material 42 may be a latent heat cold storage material.

(Fourth Embodiment)

This embodiment is a modification based on the preceding embodiments, and the description of the preceding embodiments are incorporated. In the previous embodiments, the pitch P1 (i.e., the spacing) of the beams 43 is not specifically mentioned. In this embodiment, the pitch P1 of the beams 43 will be described.

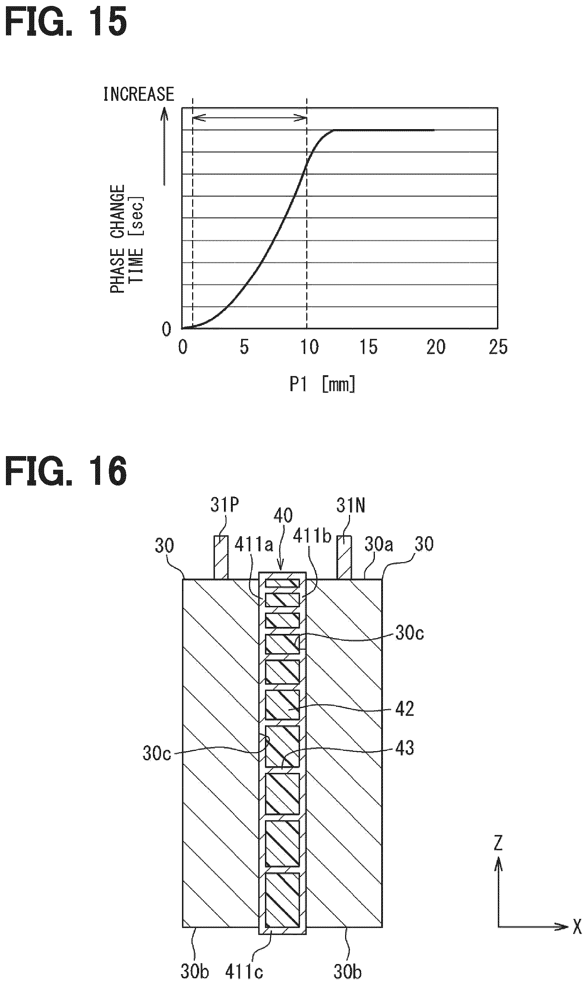

FIG. 15 is a diagram showing the relationship between the pitch P1 of the beams 43 (see FIG. 5) and the phase change time in the battery pack 20 according to this embodiment. FIG. 15 shows the simulation results using the Stefan solution. In this simulation, the thickness TH1 of the cold storage material 42 (see FIG. 5) was set to 15 mm. The phase change time is the time required to complete the change from solid to liquid phase, i.e., the time required to complete melting. The phase change time is zero (0) at the bottom end of FIG. 15 and increases upward.

If the pitch P1 is less than 1 mm, it is difficult to form the beams 43 with high precision. Moreover, as the pitch P1 approaches the thickness TH1, the change in the phase change time becomes smaller. When the pitch P1 is further increased, the phase change time does not change, remaining at an approximately constant value. The effect of the pitch P1 on the phase change time is significant up to 10 mm. In this embodiment, taking this result into consideration, the pitch P1 of the beams 43 is set within the range of 1 mm to 10 mm. One of the dashed lines indicates the lower limit of 1 mm, and the other dashed line indicates the upper limit of 10 mm.

<Summary of Fourth Embodiment>

As described above, in this embodiment, the pitch P1 of the beams 43, that is, the distance between adjacent beams 43, is set between 1 mm and 10 mm. By setting the pitch P1 within this range, the cold storage material 42 can be changed from the solid phase to the liquid phase in a short period.

If the pitch P1 is shorter than the thickness TH1, the phase change time can be shortened. In other words, by making the pitch P1 finer, heat can be easily distributed throughout the entire cold storage material 42, and the residual during the transition from the solid phase to the liquid phase can be reduced. Thus, instead of the above range, the pitch P1 may be set within the range between 1 mm, inclusive, and the thickness TH1, exclusive.

<Modifications>

Although the pitch P1 of the beams 43 is constant as an example in this embodiment, the present disclosure is not limited thereto. The pitch P1 may vary depending on the position. For example, as shown in FIG. 16, the pitch P1 of the beams 43 may be narrower as they approach the electrode terminals 31P, 31N. The battery cells 30 tend to have a concentration of current near the electrode terminals 31P and 31N. In other words, portions near the electrode terminals 31P, 31N are prone to becoming high-temperature areas. According to the above arrangement, heat from the electrode terminals 31P, 31N can be effectively dissipated, and the electrode terminals 31P, 31N can be prevented from becoming too hot. The pitch P1 of the beam may be set between 1 mm and 10 mm, and be narrower as the beam approaches the electrode terminals 31P, 31N.

(Fifth Embodiment)

This embodiment is a modification based on the preceding embodiments, and the description of the preceding embodiments are incorporated. This embodiment features a configuration that allows for even easier detachability.

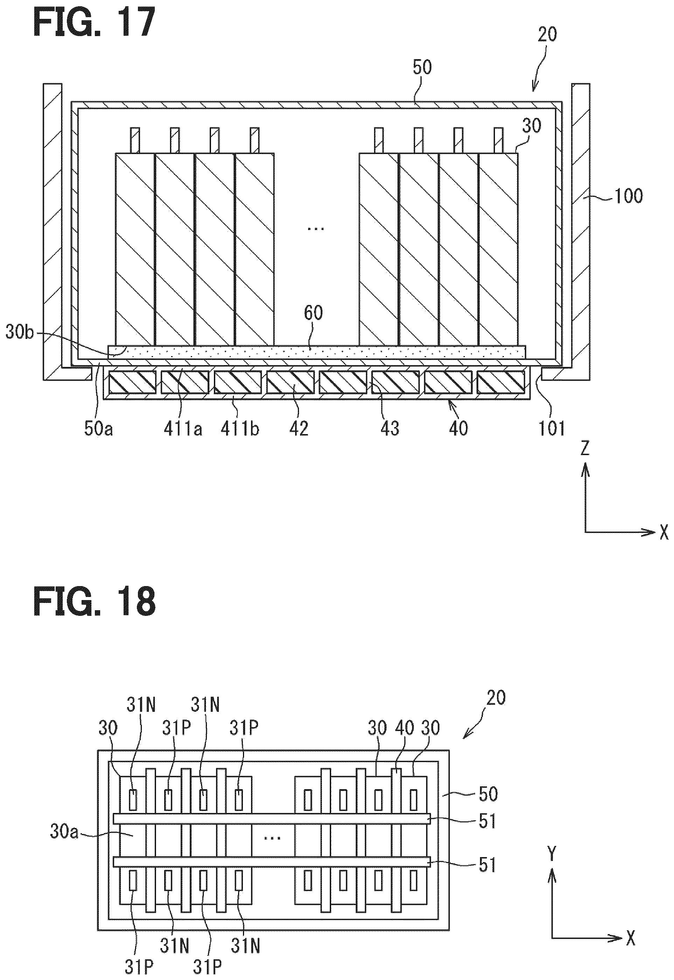

FIG. 17 is a cross-sectional view showing the battery pack 20 according to the present embodiment. FIG. 17 shows a fixing structure of the battery pack 20. In FIG. 17, illustration of a part of the battery cells 30 is omitted. The battery pack 20 is fixed to a bracket 100. The battery pack 20 is fixed to the aircraft via the bracket 100.

The bracket 100 has an opening 101. The cold storage member 40 is fixed to the bottom wall 50a of the housing 50 through the opening 101. The cold storage member 40 is fixed to the housing 50 by, for example, adhesive or bolt fastening. The cold storage member 40 is disposed so that the facing wall 411a is in contact with the bottom wall 50a. The cold storage member 40 is disposed to enclose the battery cells 30 when viewed in a plan view in the Z direction. There is a TIM 60 on the inner surface of the bottom wall 50a. The TIM overlaps with the cold storage member 40 in the plan view. The multiple battery cells 30 are disposed on the bottom wall 50a via the TIM 60. The heat of the battery cells 30 is transferred to the cold storage member 40 via the TIM 60 and the metal housing 50 (i.e., the bottom wall 50a).

<Summary of Fifth Embodiment>

In this embodiment, the cold storage member 40 is provided detachably to the housing 50. In other words, the cold storage member 40 is provided detachably with respect to the other elements constituting the battery pack 20. The cold storage member 40 is provided detachably to the battery cell 30. For example, the cold storage member 40 can be removed from other elements of the battery pack 20 by releasing the bolt fastening. Thus, it is possible to improve the heat dissipation performance and the ease of attachment and detachment.

Because of this easy detachability, the cold storage member 40 may be removed from the eVTOL 10 after the flight, cooled, and returned back to the solid phase. The cold storage member 40 may be removed after the flight and replaced with another cold storage member 40 that has cooled and transitioned back to the solid phase. Such replacement can eliminate loss of cooling time.

(Sixth Embodiment)

This embodiment is a modification based on the preceding embodiments, and the description of the preceding embodiments are incorporated.

As shown in FIG. 18, multiple battery cells 30 and multiple cold storage members 40 are pressed and fixed by a pressing member 51 serving as a fixing member. The pressing member 51 is a belt-like band. In this embodiment, two pressing members 51 press and fix the multiple battery cells 30 and the multiple cold storage members 40 in the stacking direction (i.e., the X direction). As described in the preceding embodiments, the beams 43 extend in the stacking direction and bridge the facing walls 411a, 411b.

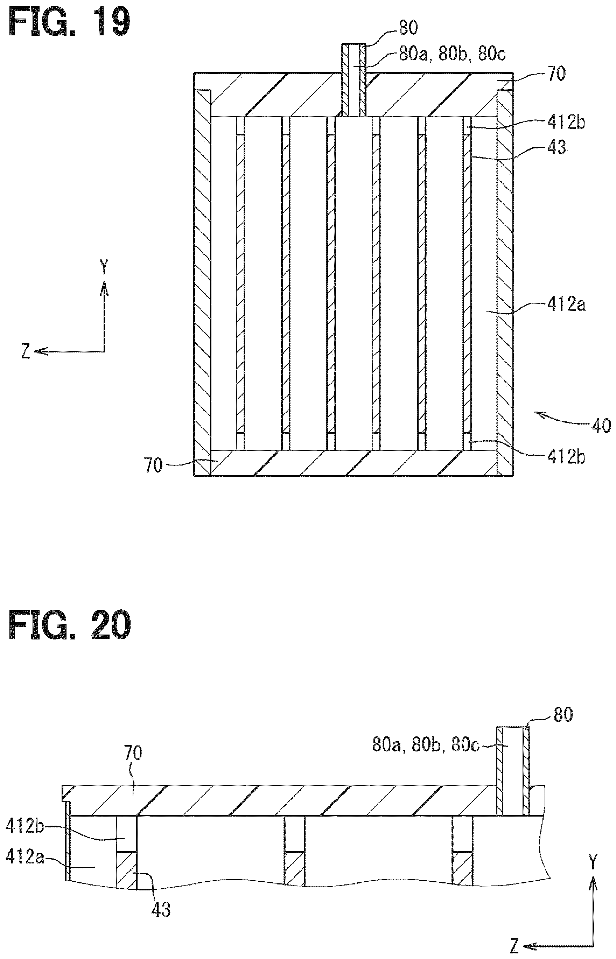

FIG. 19 is a cross-sectional view of the cold storage member 40 before being filled with the cold storage material 42 in this embodiment. FIG. 20 is an enlarged diagram of a part of FIG. 19. The supporter 41 includes a cylindrical passage portion 80 extending in the Y direction. The passage portion 80 defines a passage for filling the space 412 with gas or liquid from the outside.

As shown in FIG. 20, the passage portion 80 defines a hollow space extending in the Y direction, and the hollow space corresponds to a passage for filling the space with gas or liquid. The passage portion 80 is open at both the upper end and the lower end in the Y direction, and the lower end opens toward the space 412. The passage portion 80 is provided at an end portion of the supporter 41. The cold storage material, inert gas, and the like can be injected into the cold storage member 40 through the hollow space of the passage portion 80 from the outside. The supporter 41 may have only one passage portion 80 or multiple passage portions 80. As an example, the passage portion 80 is formed of a metal. The upper end of the passage portion 80 in the Y direction may be closed by crimping after the cold storage member 40 is filled with the cold storage material 42 and the inert gas.

The supporter 41 includes a gas injection passage 80a, a filling passage 80b, and a lid 70. The gas injection passage 80a is a passage through which an inert gas can be injected into the space 412. The hollow space of the passage portion 80 extending in the Y direction serves as the gas injection passage 80a. The space 412 of the cold storage member 40 is filled with an inert gas together with the cold storage material 42. The cold storage member 40 may have only one gas injection passage 80a or multiple gas injection passages 80a. The gas injection passage 80a may be a gas exhaust passage 80c, which is a passage for exhausting gas.

The lid 70 closes the space 412 so that the inert gas and the cold storage material 42 filling the space 412 do not leak out of the cold storage member 40. The lids 70 are provided on the upper and lower parts of the supporter 41. The lid 70 is made of a resin material.

The filling passage 80b is a passage through which the cold storage material 42 is injected into the space 412. The hollow space of the passage portion 80 extending in the Y direction serves as the filling passage 80b. The supporter 41 may define only one filling passage 80b, or multiple filling passages 80b. The gas injection passage 80a and the filling passage 80b are commonly provided as a common passage. In this embodiment, the beams 43 each have a flat plate shape extending in the XY plane. The plate surface of the beam 43 extends in a direction in which the filling passage 80b opens toward the space 412 (i.e., the Y direction).

The space 412 includes multiple beam paths 412a partitioned by the beams 43, and communication paths 412b that fluidly connect between the beam paths 412a. The beam paths 412a extend approximately parallel to the direction in which the plate surface of the beams 43 extend (i.e., the Y direction). The cold storage material 42 is injected into the beam paths 412a through the filling passage 80b.

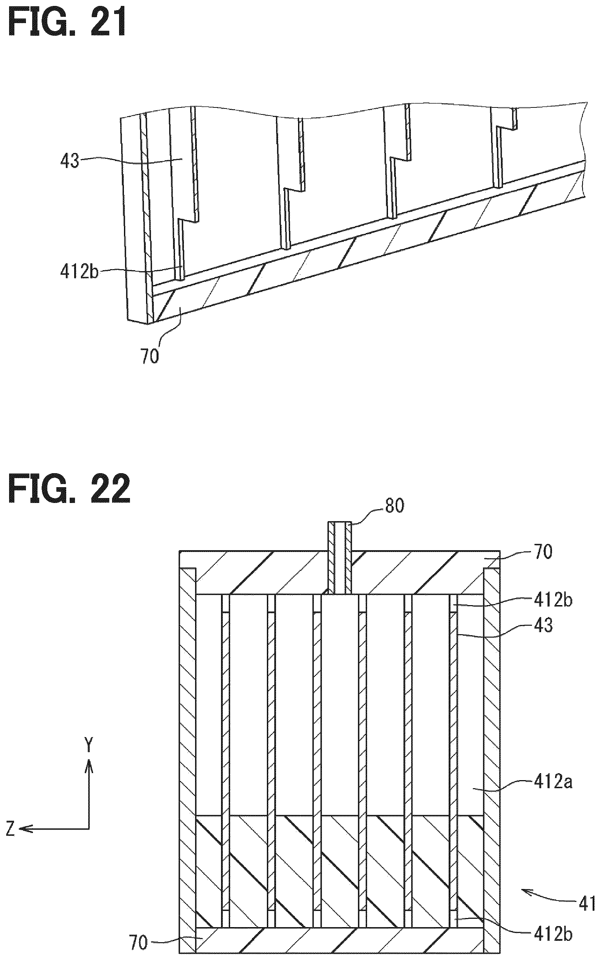

The communication paths 412b are formed, for example, by cutting out the beams 43 as shown in FIG. 21. The communication paths 412b may be formed by a method other than cutting out the beams 43, so long as the communication paths 412b are configured to fluidly connect between the beam paths 412a. Each of the beams 43 has the multiple communication paths 412b. The communication paths 412b are defined at different positions in the direction in which the cold storage material 42 moves to fill the beam paths 412a (i.e., the Y direction). In other words, the communication paths 412b are arranged in parallel in the direction in which the filling passage 80b opens toward the space 412 (i.e., the Y direction). The direction in which the cold storage material 42 moves to fill the beam paths 412a can also be interpreted as the direction in which the filling passage 80b extends or the direction in which the filling passage 80b opens toward the space 412.

In this embodiment, as shown in FIG. 19, the communication paths 412b are provided at the upper end and the lower end of the supporter 41 in a filling direction in which the cold storage material 42 flows during injection into the space 412. FIG. 22 is a diagram showing the cold storage member 40 after the cold storage material 42 is injected into the space 412. As shown in FIG. 22, the communication paths 412b located at the lower end of the supporter 41 allow the portions of the space 412 filled with the cold storage material 42 to fluidly communicate with each other. The communication paths 412b located at the upper end of the supporter 41 faces the opening of the filling passage 80b, and fluidly connects the portions of the space 412 filled with the inert gas to each other.

One of the communication paths 412b is provided at the lower end in the Y direction of the supporter 41, but may be provided at a position other than the lower end. The communication path 412b may be provided between the center and the lower end of the supporter 41 in the Y direction. The communication path 412b may be provided at a position that can fluidly connect between the portions which are filled with the cold storage material 42.

One of the communication paths 412b is provided at the upper end of the supporter 41 in the Y direction, but may be provided at a position other than the upper end. The communication path may be provided between the upper end and the center of the supporter 41 in the Y direction. The portion of the cold storage member 40 that is not filled with the cold storage material 42 is filled with an inert gas. Instead of the inert gas, a gas such as air may be injected.

Here, a method for replacing the air remaining in the space 412 with an inert gas after the cold storage material 42 is injected into the cold storage member 40 through the passage portion 80 (i.e., the filling passage 80b) will be described. The passage portion 80 (i.e., the gas injection passage 80a, the gas exhaust passage 80c, and the filling passage 80b) is connected to an inert gas cylinder by piping via a three-way valve. The three-way valve serves as three valves. The valve connected to the inert gas cylinder is referred to as a first valve, the valve connected to the passage portion 80 is referred to as a second valve, and the valve connected to a check valve is referred to as a third valve.

When replacing the gas, the first and second valves are opened and an inert gas is introduced into the space 412 via the passage portion 80 (i.e., the gas injection passage 80a). Thereafter, the first valve is closed and the second and third valves are opened, and the gas remained in the space 412 (i.e., residual air and inert gas) is released through the passage portion 80 (i.e., the gas exhaust passage 80c). By repeating this process several times, the air remaining in the cold storage member 40 can be replaced with the inert gas.

<Summary of Sixth Embodiment>

In this embodiment, the pressing member 51 presses and fixes the battery cells 30 and the cold storage members 40 in the stacking direction. The beams 43 extend in the stacking direction to bridge different walls. Here, if the multiple battery cells 30 and the multiple cold storage members 40 are pressed and fixed by the pressing member 51, the supporter 41 may be buckled. In this embodiment, the beams 43 extend in the stacking direction to bridge the walls 411, thereby preventing the supporter 41 from being buckled.

In this embodiment, the space 412 is filled with the cold storage material 42 and an inert gas. If the space 412 is filled with only the cold storage material 42, the beams 43 may be damaged when the cold storage material 42 expands in volume. The damage for the beams 43 can be reduced by not filling the space 412 completely with the cold storage material 42, but filling the space 412 partially with the cold storage material 42 and the rest with an inert gas. Filling the space 412 with an inert gas can reduce the risk of combustion compared to filling the space 412 with air.

In this embodiment, the supporter 41 has the gas injection passage 80a for filling the space 412 with an inert gas. This allows the inert gas to be injected into the space 412 through the gas injection passage 80a during the manufacturing process of the cold storage member 40. Thus, the air remaining in the cold storage member 40 can be pushed out by the inert gas and discharged. That is, the gas present in the space 412 together with the cold storage material 42 can be replaced from air to an inert gas.

In this embodiment, the filling passage 80b through which the cold storage material 42 is injected into the space 412 is provided. The beams 43 each have a plate shape, and the plate surface of the beams 43 extends in the direction in which the filling passage 80b opens toward the space 412. If the plate surface of the beams 43 extends in a direction perpendicular to the opening direction of the filling passage 80b toward the space 412, contrary to this embodiment, the cold storage material 42 will flow against the plate surface of the beams 43 during injection. At this time, most of the pressure will be applied to the beams 43. In the present disclosure, the cold storage material 42 flows from the filling passage 80b in the direction in which the beams 43 extend, so that most of the pressure is applied to the wall 411, not to the beams 43. This prevents excessive pressure from being applied to the beams 43 and causing the beams 43 to be damaged.

In this embodiment, the space 412 is filled with the cooling storage material 42 and an inert gas. The supporter 41 has the gas injection passage 80a and the filling passage 80b that are commonly provided as a single common passage. This allows a simpler structure compared to a case where the gas injection passage 80a and the filling passage 80b are provided separately.

In this embodiment, the space 412 includes the beam paths 412a and the communication paths 412b that fluidly connect the beam paths 412a to one another. When the cold storage material 42 is injected, one of the beam paths 412a near the opening of the filling passage 80b is firstly filled with the cold storage material 42. Then, when the cold storage material 42 is further injected, the cold storage material 42 flows into the adjacent beam path 412a through the communication path 412b. That is, when filling the cold storage material 42 into the space 412 inside the cold storage member 40, the cold storage material 42 can be distributed more efficiently to the beam paths 412a through the single filling passage 80b. This can improve the efficiency of filling the cold storage material 42.

In this embodiment, the space 412 is filled with gas together with the cold storage material 42. The communication paths 412b fluidly connect the portions of the beam paths 412a filled with the cold storage material 42 to each other. The filling amount may vary among the beam paths 412a immediately after the injection of the cold storage material 42 is completed. Even in this case, since the communication paths 412b are located in the portion filled with the cold storage material 42, the cold storage material 42 is distributed by its own weight through the communication paths 412b as time passes. This makes the amount of the cold storage material 42 in each beam path 412a uniform, thereby suppressing variations in cooling efficiency.

<Modifications>

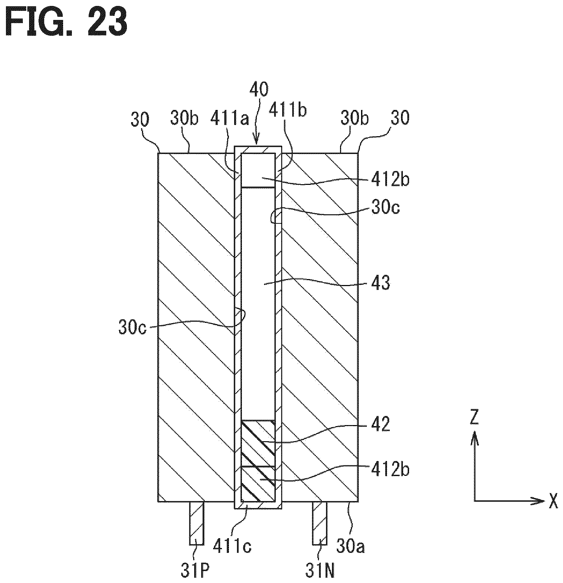

FIG. 23 is a diagram illustrating a modification. In FIG. 23, the illustration of the passage portion 80 is omitted. As shown in FIG. 23, the battery cells 30 are disposed adjacent to the cold storage member 40 with the electrode terminals 31P, 31N facing downward in the Z direction. In this modified example, the downward direction in the Z direction indicates the direction of gravity, and the upward direction in the Z direction indicates the direction opposite to the direction of gravity. The space 412 of the cold storage member 40 are filled with gas and the cold storage material 42. The filled cold storage material 42 accumulates in the lower part of the cold storage member 40 due to gravity, while the gas accumulates in the upper part of the cold storage member 40. In this modified example, the dimensions of the battery cell 30 and the cold storage member 40 in the Y direction and the Z direction are substantially equal.

The electrode terminals 31P, 31N facing downward in the Z direction means that the electrode terminals 31P, 31N are disposed below half of the battery cells 30. The electrode terminals 31P, 31N may be disposed below one third of the battery cells 30.

In this modification, the vicinity of the electrode terminals 31P, 31N of the battery cell 30 (hereinafter also referred to as the electrode terminal vicinity) is adjacent to the portion of the cold storage member 40 where the cold storage material 42 is filled. The electrode terminal vicinity refers to the periphery of the portions of the battery cells 30 adjacent to the electrode terminals 31P, 31N. The portion of the cold storage member 40 filled with the cold storage material 42 is disposed near the high temperature portion of the battery cell 30 (i.e., the electrode terminal vicinity). In other words, the portion of the cold storage member 40 filled with the gas is not disposed near the high temperature portion of the battery cells 30 (i.e., the electrode terminal vicinity). In this modification, the dimensions of the battery cells 30 and the cold storage member 40 in the Y direction and the Z direction are substantially equal, but the present disclosure is not limited thereto. As long as the electrode terminal vicinity of the battery cells 30 is disposed adjacent to the portion of the cold storage member 40 filled with the cold storage material 42, the dimensions can be changed as appropriate.

Heat generated from the electrode terminals 31P, 31N of the battery cells 30 increases the temperature of the electrode terminal vicinity. Furthermore, when the cold storage member 40 is filled with gas, the gas accumulates in the upper portion of the cold storage member 40 due to buoyancy. Thus, if the battery cells 30 are placed adjacent to the cold storage member 40 with the electrode terminals 31P, 31N facing up, contrary to the present disclosure, the area around the electrode terminals, which becomes hot, will be adjacent to the upper part of the cold storage member 40, where gas accumulates. This causes an insufficient cooling of the battery cells 30. Therefore, in this modification, the battery cells 30 are disposed adjacent to the cold storage member 40 with the electrode terminals 31P, 31N facing downward. According to this modified example, it is easy to ensure that the area near the electrode terminals of the battery cell 30 does not come into contact with the upper portion of the cold storage member 40, which is filled with gas.

The battery cell 30 may be placed adjacent to the cold storage member 40 with the electrode terminals 31P, 31N disposed horizontally. Horizontal refers to a state in which the battery cells 30 in FIG. 23 are rotated ±90 degrees on the YZ plane, for example. When the battery cells 30 are placed horizontally adjacent to the cold storage member 40, the electrode terminals 31P, 31N protrude in the Y direction. In other words, the electrode terminals 31P, 31N protrude in a direction perpendicular to the direction in which the battery cells 30 and the cold storage member 40 face each other, and in a direction perpendicular to the up-down direction. In this case as well, the area of the battery cells near the electrode terminals 31P, 31N is positioned adjacent to the portion of the cold storage member 40 filled with the cold storage material 42, so that similar effects as those in the above-mentioned modified example can be obtained.

Although the electrode terminals 31P and 31N protrude from the top surface 30a, the electrode terminals 31P and 31N do not have to protrude from the same surface. One of the electrode terminals 31P, 31N may protrude from the top surface 30a, and the other may protrude from the bottom surface 30b. In this case as well, by arranging the battery cells 30 adjacent to the cold storage member 40 with the electrode terminals 31P, 31N lying horizontally, the similar effects as those in in the above-mentioned modified example can be obtained.

Placing the electrode terminals 31P, 31N horizontally means that the electrode terminals 31P, 31N are disposed below the upper one third of the battery cells 30.

The direction in which the pressing member 51 presses the battery cells 30 and the cold storage members 40 is not limited to the stacking direction. The pressing member 51 may also press the battery cells 30 and the cold storage member 40 in other directions to fix them.

Although the space 412 is filled with an inert gas together with the cold storage material 42, it is not necessary to fill the space with an inert gas. The space 412 may be filled with something other than an inert gas (e.g., air).

Although the plate surface of the beams 43 extend in a direction in which the filling passage 80b opens toward the space 412, the present disclosure is not limited to this. The plate surface of the beams 43 may extend in a direction perpendicular to the opening direction toward the space 412.

The gas injection passage 80a and the filling passage 80b do not have to be a common passage. The gas injection passage 80a and the filling passage 80b may be provided separately.

Although the space 412 includes the communication paths 412b that fluidly connect the multiple beam paths 412a to each other, the communication paths 412b do not necessarily have to be provided.

The communication paths 412b may fluidly connect the portions of the beam paths 412a that are not filled with the cold storage material 42 to each other.

The battery cells 30 may be disposed adjacent to the cold storage member 40 with the electrode terminals 31P, 31N facing upward in the Z direction.

(Other embodiments)

The disclosure in this specification, the drawings, and the like is not limited to the illustrated embodiments. The present disclosure encompasses the illustrated embodiments and modifications based on them by those skill in the art. For example, the disclosures are not limited to the combinations of components and/or elements shown in the embodiments. The disclosure may be implemented in various combinations. The present disclosures may include additional parts which may be added to the embodiments. The disclosures encompass those in which the components and/or elements of the embodiments are omitted. The disclosures include replacements or combinations of components and/or elements between one embodiment and another embodiment. The disclosed technical scope is not limited to the descriptions of the embodiments. The disclosed technical scopes should be indicated by the descriptions of the claims, and should be further understood to include all modifications within the meanings and range equivalent to the descriptions of the claims.

The disclosures in the specification, drawings and the like are not limited by the descriptions of the claims. The disclosures in the specification, the drawings, and the like encompass the technical ideas described in the claims, and further extend to a wider variety of technical ideas than those in the claims. Therefore, various technical ideas can be extracted from the disclosure of the specification, the drawings, and the like without being limited to the description of the claims.

When an element or layer is referred to as being "on," "coupled," "connected," or "combined," it may be directly on, coupled, connected, or combined to the other element or layer, or further, intervening elements or layers may be present. In contrast, when an element or a layer is described as "disposed directly above" or "directly connected", an intervening element or an intervening layer is not present. Other terms used to describe the relationships between elements (for example, "between" vs. "directly between", and "adjacent" vs. "directly adjacent") should be interpreted similarly. As used herein, the term "and/or" includes any combination and all combinations relating to one or more of the related listed items. For example, the term A and/or B includes only A, only B, or both A and B.

The number of the battery cells 30 included in the battery pack 20 is not limited to the above example. For example, only one battery cell 30 may be provided.

A portion of the cold storage member 40 may be in contact with the side surface 30c of the battery cell 30, and another portion may be in contact with the bottom surface 30b.

(Disclosures of Technical Idea)

This description discloses multiple technical ideas described in multiple items listed below. Some items may be written in a multiple dependent form with subsequent items referring to the preceding item as an alternative. Some items may be written in a multiple dependent form referring to another multiple dependent form. These sections written in the multiple dependent form define multiple technical ideas.

<Technical Idea 1>

A battery pack to be installed in an electric mobile object is provided. The battery pack includes a battery cell (30), and a cold storage member (40) configured to cool the battery cell. The cold storage member includes a supporter (41) that has a wall defining a space therein, a cold storage material (42) that is disposed in the space and supported by the supporter, and a beam (43) that bridges the wall. The supporter and the beam are made of a material that has a better thermal conductivity than the cold storage material.

<Technical Idea 2>

According to the battery cell of technical idea 1, the wall includes two facing walls that face each other. The beam bridges the two facing walls. At least one of the two facing walls is directly or indirectly in contact with the battery cell.

<Technical Idea 3>

According to the battery cell of technical idea 2, the beam has a honeycomb structure, a fin structure, or a pillar structure in which multiple pillars extend in one direction.

<Technical Idea 4>

According to the battery cell of any one of technical ideas 1 to 3, the battery cell is one of battery cells. At least a part of the cold storage member is interposed between and held by adjacent ones of the battery cells.

<Fifth technical idea>

According to the battery cell of any one of technical ideas 1 to 3, at least a part of the cold storage member is in contact with a bottom surface of the battery cell.

<Sixth technical idea>

According to the battery cell of any one of technical ideas 1 to 5, the cold storage material is a latent heat storage material.

<Seventh technical idea>

According to the battery cell of technical idea 6, the latent heat storage material has a phase transfer temperature that falls between 30 °C and 60 °C.

<Eighth technical idea>

According to the battery pack of technical idea 7, the latent heat storage material is an anhydrous carbon compound.

<Ninth technical idea>

According to the battery pack of technical idea 6 or 7, the latent heat storage material is water-soluble and adjusted to have a pH of 6 to 8.

<Tenth technical idea>

According to the battery pack of any one of technical ideas 1 to 9, the beam is one of beams. A distance between adjacent ones of the beams falls between 1 mm to 10 mm.

<Eleventh technical idea>

According to the battery pack of any one of technical ideas 1 to 10, the battery cell includes an electrode terminal (31P, 31N). The beam is one of beams. A distance between adjacent ones of the beams becomes narrower as the beams get closer to the electrode terminal.

<Technical idea 12>

According to the battery pack of any one of technical ideas 1 to 11, at least a part of the cold storage member is detachable from the battery cell.

<Technical Idea 13>

According to the battery pack of any one of technical ideas 1 to 12, the battery cells and the cold storage members are alternatively arranged in a predetermined stacking direction. The battery pack further includes a pressing member (51) configured to press and fix the battery cells and the cold storage members. The beam extends in the predetermined stacking direction to bridge the wall.

(Technical idea 14)

According to the battery pack of any one of technical ideas 1 to 13, the space is filled with the cold storage material and an inert gas.

(Technical idea 15)

According to the battery pack of technical idea 14, the supporter defines a gas injection passage (80a) through which the inert gas is injected into the space.

(Technical idea 16)

According to the battery pack of technical ideas 1 to 15, the supporter defines a filling passage (80b) through which the cold storage material is injected into the space. The filling passage opens toward the space in an opening direction. The beam has a plate shape and has a plate surface extending in the opening direction.

(Technical idea 17)

According to the battery pack of technical ideas 1 to 13, the space is filled with the cold storage material and an inert gas. The supporter defines a gas injection passage through which the inert gas is injected into the space and a filling passage (80b) through which the cold storage material is injected into the space. The gas injection passage and the filling passage are commonly provided as a common passage.

(Technical idea 18)

According to the battery pack of any one of the technical ideas 1 to 17, the space includes beam paths (412a) partitioned by the beam and a communication path (412b) fluidly connecting between the beam paths.

(Technical feature 19)

According to the battery pack of technical idea 18, the cold storage material flows through the beam paths in a filling direction during injection of the cold storage material into the space. The communication path is one of communication paths. The communication paths are defined at different positions of the beam in the filling direction.

(Technical feature 20)

According to the battery pack of technical idea 18, the space is filled with the cold storage material and a gas. The beam paths have filled portions that are filled with the cold storage material, and the communication path fluidly connects between the filled portions.

(Technical feature 21)

According to the battery pack of any one of technical ideas 1 to 20, the space is filled with the cold storage material and a gas. The battery cell has an electrode terminal (31P, 31N). The battery cell has a portion from which the electrode terminal protrudes. The cold storage member has a portion which is filled with the cold storage material. The portion filled with the cold storage material is adjacent to the portion from which the electrode terminal protrudes.

**Claims**

1.   A battery pack to be installed in an electric mobile object, the battery pack comprising:

a battery cell (30); and
a cold storage member (40) configured to cool the battery cell, wherein
the cold storage member includes:

a supporter (41) that has a wall defining a space therein;
a cold storage material (42) that is disposed in the space and supported by the supporter; and
a beam (43) that bridges the wall, and

the supporter and the beam are made of a material that has a better thermal conductivity than the cold storage material.

2.   The battery pack according to claim 1, wherein

the wall includes two facing walls that face each other,
the beam bridges the two facing walls,
at least one of the two facing walls is directly or indirectly in contact with the battery cell.

3.   The battery pack according to claim 2, wherein the beam has a honeycomb structure, a fin structure, or a pillar structure in which multiple pillars extend in one direction.

4.   The battery pack according to claim 1 or 2, wherein

the battery cell is one of battery cells,
at least a part of the cold storage member is interposed between and held by adjacent ones of the battery cells.

5.   The battery pack according to claim 1 or 2, wherein at least a part of the cold storage member is in contact with a bottom surface of the battery cell.

**6.** The battery pack according to claim 1, wherein the cold storage material is a latent heat storage material.

**7.** The battery pack according to claim 6, wherein the latent heat storage material has a phase transfer temperature that falls within a range between 30 °C and 60 °C.

**8.** The battery pack according to claim 7, wherein the latent heat storage material is an anhydrous carbon compound.

**9.** The battery pack according to claim 6 or 7, wherein the latent heat storage material is water-soluble and adjusted to have a pH of 6 to 8.

**10.** The battery pack according to claim 1 or 2, wherein

the beam is one of beams, and
a distance between adjacent ones of the beams falls within a range between 1 mm to 10 mm.

**11.** The battery pack according to claim 1 or 2, wherein

the battery cell includes an electrode terminal (31P, 31N),
the beam is one of beams, and
a distance between adjacent ones of the beams becomes narrower as the beams get closer to the electrode terminal.

**12.** The battery pack according to claim 1 or 2, wherein at least a part of the cold storage member is detachable from the battery cell.

**13.** The battery pack according to claim 1, further comprising

a pressing member (51) configured to press and fix the battery cell and the cold storage member, wherein
the battery cell is one of battery cells,
the cold storage member is one of cold storage members,
the battery cells and the cold storage members are alternatively arranged in a predetermined stacking direction and fixed by the pressing member, and
the beam extends in the predetermined stacking direction to bridge the wall.

**14.** The battery pack according to claim 1 or 13, wherein the space is filled with the cold storage material and an inert gas.

**15.** The battery pack according to claim 14, wherein the supporter defines a gas injection passage (80a) through which the inert gas is injected into the space.

**16.** The battery pack according to claim 1 or 13, wherein

the supporter defines a filling passage (80b) through which the cold storage material is injected into the space,
the filling passage opens toward the space in an opening direction, and
the beam has a plate shape and has a plate surface extending in the opening direction.

**17.** The battery pack according to claim 1 or 13, wherein

the space is filled with the cold storage material and an inert gas,
the supporter defines a gas injection passage through which the inert gas is injected into the space and a filling passage (80b) through which the cold storage material is injected into the space, and
the gas injection passage and the filling passage are commonly provided as a common passage.

**18.** The battery pack according to claim 1 or 13, wherein the space includes beam paths (412a) partitioned by the beam and a communication path (412b) fluidly connecting between the beam paths.

**19.** The battery pack according to claim 18, wherein

the cold storage material flows through the beam paths in a filling direction during injection of the cold storage material into the space,
the communication path is one of communication paths, and
the communication paths are defined at different positions of the beam in the filling direction.

**20.** The battery pack according to claim 18, wherein

the space is filled with the cold storage material and a gas,
the beam paths have filled portions that are filled with the cold storage material, and
the communication path fluidly connects between the filled portions.

**21.** The battery pack according to claim 1, wherein

the space is filled with the cold storage material and a gas,
the battery cell has an electrode terminal (31P, 31N),
the battery cell has a portion from which the electrode terminal protrudes,
the cold storage member has a portion which is filled with the cold storage material, and

the portion filled with the cold storage material is adjacent to the portion from which the electrode terminal protrudes.

# FIG. 1

# FIG. 2

# FIG. 3

# FIG. 4

# FIG. 5

# FIG. 6

# FIG. 7

Y-axis: INCREASE ↑ HEAT DISSIPATION, 0

X-axis: ELAPSED TIME (sec), 0, 50, 100, 150

# FIG. 8

<WITHOUT BEAM>

<WITH BEAM>

# FIG. 9

# FIG. 10

**FIG. 11**

**FIG. 12**

# FIG. 13

# FIG. 14

# FIG. 15

INCREASE

PHASE CHANGE
TIME [sec]

P1 [mm]

# FIG. 16

# FIG. 17

# FIG. 18

## FIG. 19

## FIG. 20

# FIG. 21

# FIG. 22

# FIG. 23

## INTERNATIONAL SEARCH REPORT

| International application No. |
|---|
| **PCT/JP2023/040144** |

**A. CLASSIFICATION OF SUBJECT MATTER**

*H01M 10/659*(2014.01)i; *H01M 10/613*(2014.01)i; *H01M 10/625*(2014.01)i; *H01M 10/653*(2014.01)i; *H01M 10/6556*(2014.01)i; *H01M 10/6557*(2014.01)i
FI:  H01M10/659; H01M10/613; H01M10/625; H01M10/653; H01M10/6557; H01M10/6556

According to International Patent Classification (IPC) or to both national classification and IPC

**B. FIELDS SEARCHED**

Minimum documentation searched (classification system followed by classification symbols)

H01M10/659; H01M10/613; H01M10/625; H01M10/653; H01M10/6556; H01M10/6557

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-44111 A (YAZAKI CORP.) 18 March 2021 (2021-03-18) paragraphs [0014]-[0034] | 1-2, 5-8, 10 |
| Y | | 3-4, 9, 13 |
| A | | 11-12, 14-21 |
| Y | WO 2008/053853 A1 (KIYOKAWA, Shin) 08 May 2008 (2008-05-08) paragraphs [0009], [0020] | 3, 9 |
| Y | JP 2010-73406 A (TOYOTA MOTOR CORP.) 02 April 2010 (2010-04-02) paragraphs [0037]-[0042] | 4, 13 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 December 2023** | **16 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2023/040144** |

| Patent document cited in search report | | | Publication date (day/month/year) | Patent family member(s) | Publication date (day/month/year) |
| --- | --- | --- | --- | --- | --- |
| JP | 2021-44111 | A | 18 March 2021 | US 2021/0075076 A1 paragraphs [0021]-[0041] EP 3793018 A1 CN 112563610 A | |
| WO | 2008/053853 | A1 | 08 May 2008 | (Family: none) | |
| JP | 2010-73406 | A | 02 April 2010 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022182748 A

- JP 2020170584 A